# EUROPEAN PATENT APPLICATION

(11) **EP 1 569 086 A2**
(43) Date of publication of application: **31.08.2005**
(21) Application number: 04017409.6
(22) Date of filing: 22.07.2004
(51) Int. Cl.: G06F 3/12

(54) **Printing using instant message protocol**

(30) Priority: 27.01.2004 US 766496
(71) Applicant: Hewlett-Packard Development Company, L.P., Houston, TX 77070 (US)
(72) Inventor: Heiles, Lainye, Vancouver Washington 98683 (US)
(74) Representative: Schoppe, Fritz

(57) **Abstract**

A printing system (10) including an instant message server configured to process data received using instant message protocol, an instant message printer application (56) associated with the instant message server configured to translate print data received in instant message protocol into a printable format, and a printer (28) coupled with the instant message printer application (56) configured to print the translated print data.

## Description

### BACKGROUND

Recent years have seen a proliferation of portable electronic devices, such as personal digital assistants (PDA's), cellular telephones, and similar other portable electronic devices. These devices offer a variety of capabilities including scheduling calendars, contact information, task lists, email applications, pager functions, cellular telephone capabilities, wireless internet access, etc.

In spite of recent advancements in microprocessor technology, these devices may still have somewhat limited computing capability, when compared to traditional desktop and laptop computers. For example, some portable electronic devices cannot execute applications such as word processor or spreadsheet applications. When it comes to printing documents, these portable devices may be unable to perform tasks, such as, rendering documents into printer compatible form.

In view of the foregoing, situations may arise where hardcopy documents cannot readily be provided. For example, a user of the portable device may find himself or herself in a situation where he or she is standing in front of a printer with a personal digital assistant in hand and a document stored thereon that he or she wishes to print. Unfortunately, in such a circumstance, the user may be unable to print a document on the printer due to a lack of connectivity between the printer and the personal digital assistant.

### BRIEF DESCRIPTION OF THE DRAWINGS

Fig. 1 is a schematic representation of a network environment including a printing system, according to an embodiment of the invention.
Fig. 2 is a schematic representation of another network environment including a printing system, according to an embodiment of the invention.
Fig. 3 is a flow chart illustrating a method of discovering mobile printers, according to an embodiment of the invention.
Fig. 4 is a flow chart illustrating a method of processing instant message document requests, according to an embodiment of the invention.
Fig. 5 is a flow chart illustrating a method of processing print subscription requests, according to an embodiment of the invention.
Fig. 6 is a flow chart illustrating a method of processing print content received via instant message protocol, according to an embodiment of the invention.

### DETAILED DESCRIPTION

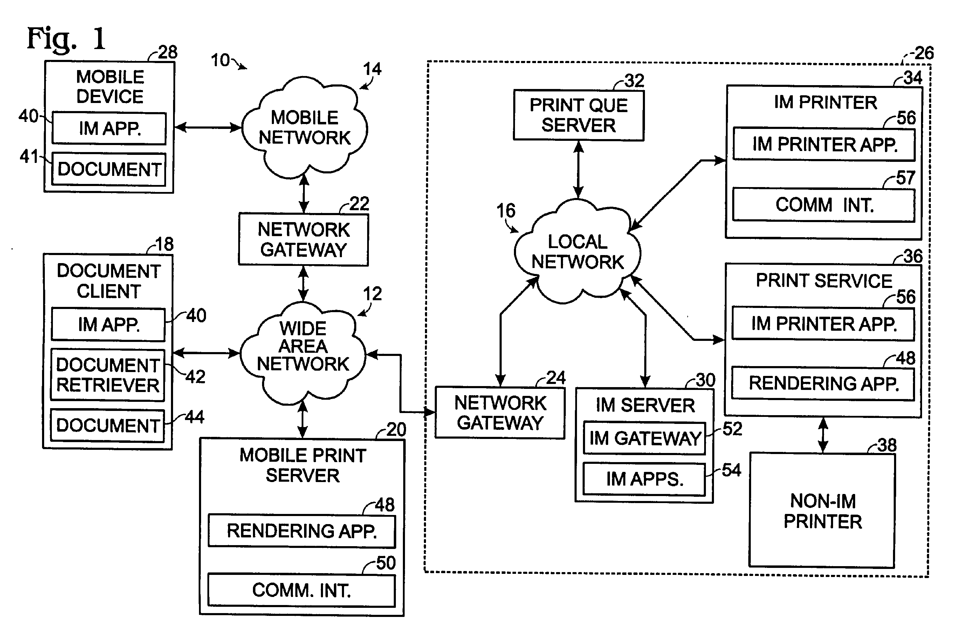

A network environment for mobile printing is shown in Fig. 1, generally indicated at 10. Network environment 10 includes a plurality of components that interact in multiple ways to accomplish mobile printing of a document, as will be discussed in detail below. Initially, the physical components of network environment 10 will be discussed followed by a discussion of the operation of the network environment to effect mobile printing of a document from the perspective of various components within network environment 10.

As shown, network environment 10 may include a wide area network 12, a mobile network 14, and a local area network 16. Network 12 may be, for example, the Internet. Mobile network 14 may include, for example, a cellular network, a pager network, or other wireless network infrastructure, as know by those of skill in the art. Local area network (LAN) 16 may include any one of a number of network technologies. For example, LAN 16 may use peer-to-peer architecture, a ring architecture, a star architecture, a bus architecture, or other network configurations.

Coupled to wide area network 12 are a document client 18 and a mobile print server 20. Document client 18 and mobile print server 20 may include, for example, a computer system or other such system, as in know by those of skill in the art. Document client 18 may store documents and other data files. Document client 18 may also permit remote access to retrieve stored documents and other data files.

Document client 18 may include an instant message (IM) application 40. IM application 40 may include an IM address that identifies the document client to the network and enables receipt by the document client of IM protocol communications. IM application 40 may be configured to interact with a document retriever 42. Document retriever 42 may be configured to search a file tree to retrieve a document 44. Document 44 may be an electronic document or any other type of file that is stored on document client 18.

Mobile print server 20 may process print requests. Mobile print server 20 may include an IM printer application 56 and a rendering application 48. IM printer application 56 may be configured to handle print job processing functions. Print job processing functions may include resolving print content and pushing print jobs to a printer. Rendering application 48 may be configured to convert content into a printable format for a printer. It will be understood that both IM printer application 56 and rendering application 48 may reside on different components of network environment 10. A communications interface 50 may be included in mobile print server 20 to provide for communication with wide area network 12. Communication interface 50 may be configured to send and receive data using instant message protocol as well as other suitable protocols, such as, HTTP, TCP/IP, etc.

A network gateway 22 typically connects wide area network 12 with mobile network 14 for data communication between the two networks. Network gateway 22 may be used to control the flow of data between mobile network 14 and wide area network 12. Network gateway 22 may employ Transmission Control Protocol/Internet Protocol (TCP/IP), Hypertext Transfer Protocol (HTTP), or other suitable technologies as is generally known by those of skill in the art.

Wide area network 12 may be coupled with LAN 16 via another network gateway 24 to bridge the two networks for data communication. Network gateway 24 enables communication between components on wide area network 12 and components on LAN 16. Network Gateway 24 may employ a hardware or software based firewall to prevent unauthorized access to LAN 16 and the computers and peripherals connected thereto.

As shown, network environment 10 may include a print location 26, which itself includes LAN 16. Print location 26 may be, for example, a particular company, institution, or other entity that maintains local area network 16. In Fig. 1, print location 26 will be seen to include one or more printers accessible by a user of a mobile device 28 to print a document. The one or more printers in print location 26 may be part of the printing system.

Print location 26 may include, in addition to the aforementioned network gateway 24 and LAN 16, an instant message (IM) server 30, a print que server 32, an instant-message-enabled printer (IM printer) 34, a print service 36, and a non-instant-message-enabled printer (non-IM printer) 38. IM sever 30 typically processes IM messages. Print que server 32 may be used to control the flow of print jobs to the network printers on LAN 16. IM printer 34 may print documents received by IM printer 34 in an IM format. Print service 36 may process print jobs and convert documents into a format for printing by a non-IM printer. Non-IM printer 38 may print documents received by non-IM printer 38 in a printer ready format.

Non-IM printer 38 may be coupled directly with a network computer and may be referred to as a legacy printer. IM server 30 may be coupled with other components via LAN 16. Similarly, print que server 32, IM printer 34, and print service 36 may be coupled with other components via LAN 16. Non-IM printer 38 may be connected to LAN 16 via print service 36, or may be connected directly to LAN 16. Print Service 36 may be used to perform printing applications, such as IM printer applications and/or rendering applications for printers on the network.

Mobile device 28 may be a wireless or wired mobile device, for example, a personal digital assistant, a handheld computer, a cell phone, a pager, or a similar device configured for communication via an instant message protocol.

Many of the elements above that make up network environment 10 may include various subcomponents and/or systems that are capable of being implemented by software, hardware, or combinations of hardware and software. Additionally, many of these components may function as needed in a variety of locations within the network environment, thereby providing flexibility in the installation and operation of network environment 10.

IM server 30 may include an IM gateway 52 configured to process IM messages received via LAN 16. IM gateway 52 also may maintain a list of available IM addresses and may route IM messages to various IM clients (or IM enabled devices) via LAN 16. In addition to IM gateway 52, IM server 30 may include one or more IM applications 54 configured to achieve functions related to IM processing. For example, an IM application 54 may be configured to manage subscriptions from IM clients available on IM server 30. Managing subscriptions from an IM client may include maintaining a list of active IM clients presently in communication with IM server 30. For example, a user of a mobile device may subscribe to IM server 30 and permit IM server 30 to notify other IM clients of the availability of the user for receipt of IM messages. Similarly, IM-enabled printer 34 may subscribe to IM server 30 to notify other IM clients, including the user of a mobile device, that IM-enabled printer 34 is available for printing.

Other examples of IM applications may include billing integration applications (to track charges for IM message usage), or IM printer applications (to handle printer functions such as parsing content and retrieving content). It will be understood that any number of functions may be accessible via IM server 30 and its associated IM applications.

IM printer 34, as noted above, may be configured to communicate with other IM-enabled devices. An IM-printer application 56 may be stored and executable on IM printer 34 to achieve this IM communications capability. IM-printer application 56 may be configured to cause IM printer 34 to print documents in response to an IM print request. An IM print request is an IM protocol communication that requests a document be printed. An IM print request may include the document data, also referred to as content, or may include reference information identifying where the document data/content may be retrieved, or resolved. IM printer application 56 may parse the content to be printed from an IM print request, or parse the reference information identifying where the document data/content may be retrieved. Additionally, IM print application 56 may retrieve the referenced document data when that data is not contained in the IM print request, but the location of the data is identified.

IM printer 34 may also include a rendering application 48 that facilitates printing documents. Rendering application 48 may translate the document data into a format that is printable by IM printer 34. For example, rendering application 48 may convert data into text and images that are then printed by IM printer 34. Finally, IM printer 34 may include a communication interface 57 configured to communicate with LAN 16 for receiving and transmitting data. Communication interface 57 may be configured to use IM protocol, HTTP, SMTP, TCP/IP, and similar protocols.

In some configurations, particularly where there are one or more network printers present on LAN 16, print que server 32 may be used to control the flow and ordering of print jobs. Print que server 32 may be designed to handle print jobs from various components on LAN 16. It may be possible to configured print que server 32 to handle IM print requests (print jobs received in IM protocol format) by placing one or more IM applications onto print que server 32. For example, placing IM printer application 56 on print que server 32 may enable handling of IM print requests. For example, IM printer application 56 running on print que server 32 may parse content from an IM print Request and forward the parsed content to rendering application 48 for translation into a printable format. Additionally, IM printer application 56 running on print que server 32 may retrieve content referenced in an IM print request.

Print service 36 may be configured to handle IM print requests using IM-printer application 56. IM printer application 56 may be configured to parse content to be printed from an IM print request. Additionally, IM printer application 56 may resolve referenced print content from another source, such as document client 18 or a local file server (not shown) attached to LAN 16. Additionally, print service 36 may include rendering application 48 to translate content into printable format and render the print images.

Non-IM printer 38 may be supported by print service 36 so that non-IM printer 38 may process IM print requests. Typically, non-IM printer 38 is an older printer that does not have the hardware or software capabilities to print using IM protocol. By attaching non-IM printer 38 to print service 36 the print service can interact with the IM print request and may effect parsing, translation and rendering to produce a print job configured for non-IM printer 38. This may enable printing based on IM print requests by printers otherwise not equipped to process IM print requests.

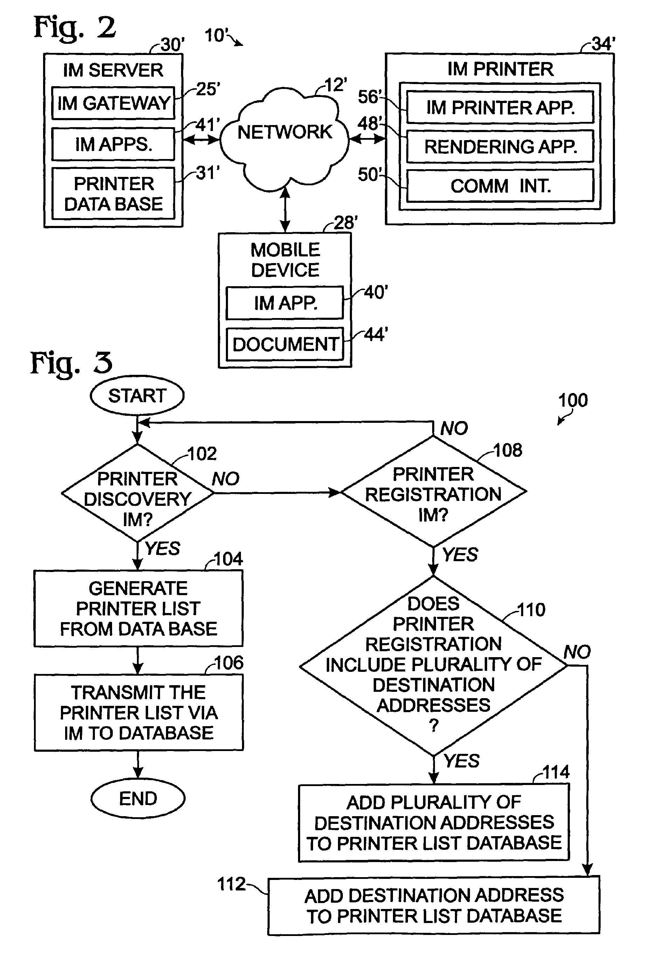

Fig. 2 illustrates another network environment, generally indicated at 10', which is configured to enable printing using an IM protocol. Network environment 10' includes network 12' interconnecting for data communication a mobile device 28', an IM server 30', and an IM-enabled printer 34'. Network environment 10' enables an IM application 40' running on mobile device 28' to make an IM print request for printing a document 44' via IM server 30' to IM enabled printer 34'.

IM application 40' may send a print subscription request to IM server 30'. A print subscription request asks the IM server for information about available IM enabled printers. In response to the print subscription request IM server 30' may query a printer database 31' to retrieve the printer availability information requested by IM application 40'. IM server 30' may send the retrieved printer availability information to mobile device 28'. IM application 28' may display the printer availability information on a display (not shown) of mobile device 28' for user selection of a printer.

A user may send an IM print request which is addressed to IM-enabled printer 34'. An IM print request is an instant message addressed to a destination configured to process IM print requests. The IM print request will be routed by IM gateway 35 to IM-enabled printer 34'. IM-enabled printer 34' uses communication interface 50' and IM printer application 56' to process the incoming IM print request. IM print application 56' may be configured to parse document 44' from the IM print request if it was attached, or may resolve the print content if it was referenced in the IM print request. A rendering application 48' may translate the print content into a printable format. IM-enabled printer 34' then prints the document. IM-printer application 56' may send an IM print status message via IM server 30' to mobile device 28'.

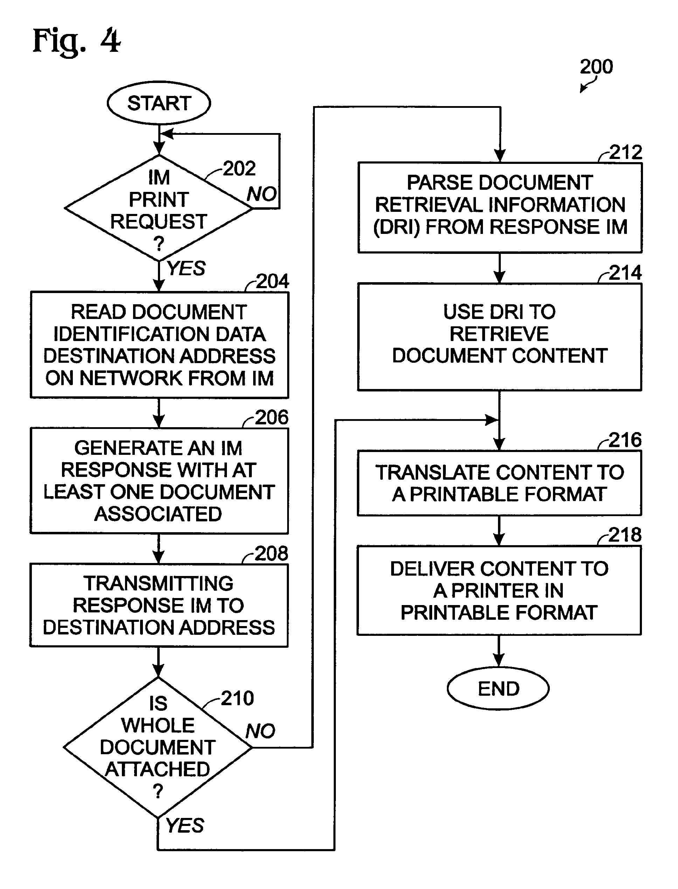

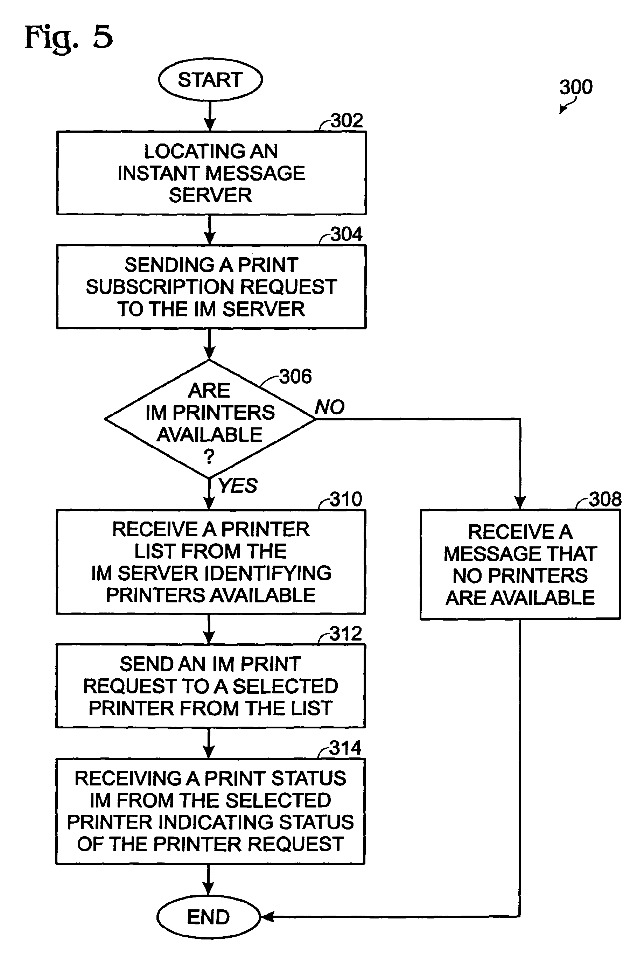

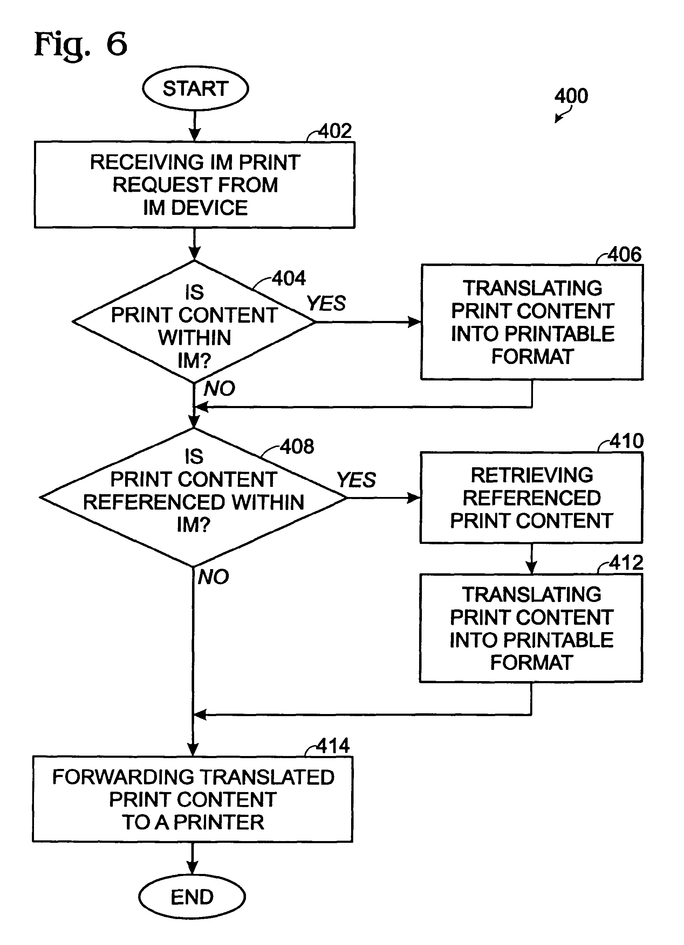

The interaction between an IM-enabled printer, such as printer 34 of Fig. 1, and an IM server, such as IM server 30 of Fig. 1, will now be discussed with reference to Fig. 3. The initial interaction of a mobile device with an IM server also now will be discussed with reference to Fig. 3. The discussion will be from the perspective of the IM server in these interactions. The interaction between a mobile device, an IM server, and an IM print application, will be discussed with reference to Fig. 4. The discussion of Fig. 4, will be from the perspective of the IM print application. The interaction between a mobile device, an IM server, and an IM enabled printer will be discussed with reference to Fig. 5. The discussion of Fig. 5, will be from the perspective of a mobile device. The interaction between a IM print application and a mobile device will be discussed with reference to Fig. 6. The discussion of Fig. 6 will be from the perspective of the IM print application.

A method of processing printer registration requests and printer discovery request is generally indicated at 100, in Fig. 3. Method 100 includes an IM server monitoring receipt of IM messages from IM clients, as illustrated at 102 and 108. It will be understood that an IM client is any device or application configured to communicate with an IM server using IM protocol.

The IM server determines if an IM message is a printer discovery request, as indicated at 102. A printer discovery request may include an IM message that asks the IM server to reply with a list of available printers to the IM client that sent the printer discovery request. If the IM message is a printer discovery request, the IM server generates a printer list, as indicated at 104. The printer list may be a file stored on the IM server. After the printer list is generated the IM server sends the printer list to the IM client that sent the printer discovery request, as indicated at 106. The printer list may resemble the typical "buddy list" found in IM chat applications that are well known.

If the IM message is not a printer discovery request, the IM server determines if the IM message is a printer registration message, as indicated at 108. A printer registration message may be an IM message that seeks to register one or more printers with the IM server. The IM server can send IM print requests to printers that are registered. If the IM message is a printer registration message, the IM application determines, at 110, whether the printer registration message includes a plurality of printers for registration. A plurality of printers may be typical for an IM print application installed on a network component, such as a print server.

If the printer registration includes a single printer, then a single printer destination address may be added to the printer list stored on the IM server, as indicated at 112. This printer may then be available for printing of documents from IM clients of the IM server.

If the printer registration includes a plurality of printer addresses, then a plurality of printer addresses are added to the printer list stored on the IM server, as indicated at 114. A print server having an IM-printer application installed may process the IM print request, and then send the resulting print job to a selected printer in a format that the printer can handle.

It will be understood that an IM-printer application may be stored and executed on any of a number of IM clients within a network environment. Two examples of network configurations where an IM-print application may be found on different components follow. First, the IM application may be found stored and executed on an IM-enabled printer. In this case, some of the communication steps are eliminated because the destination printer is processing the IM print request. Second, in another configuration, the IM print application may be stored and executed on a network print service. In this configuration, the IM print request may be translated into a non-IM protocol print job format for printing on the printer indicated in a destination address of the IM print request. This configuration may be found in a network environment having printers, which are not IM enabled. Executing an IM print application on the print service enables translation between an IM print request and non-IM protocol print jobs. Thereby enabling the non-IM printers to print in response to IM print requests.

A method of processing IM print request from the perspective of an IM-print application is illustrated in Fig. 4, generally indicated at 200. In executing method 200, an IM print application may check for an IM print request, as indicated at 202. When an IM print request is received, the IM printer application may read document identification data and a destination address from the IM print request, as indicated at 204. It should be noted that if the IM-printer application is running on an IM-enabled printer the destination address should match that of the IM-enabled printer. Document identification data may include actual document content to be printed, or it may include retrieval information for locating and resolving the document content for printing.

The IM printer application may generate a response IM with at least one document associated therewith, as indicated at 206. The response IM may include the identification data and may be addressed to the destination address received in the IM print request. The IM printer application may transmit the response IM with the document associated therewith to the destination address, as indicated at 208. In the context of a network configuration where the IM application is stored and executed on an IM-enabled printer, the generation and transmission of the response IM may not be necessary because the destination of the IM response may be the IM-enabled printer, where the IM print request may have already been received.

The IM-printer application may determine if document content is present, as indicated at 210. If the document content is a complete document ready for translation into printable format, then the content may be translated into printable format, as indicated at 216.

If the document contains at least some content that is only reference and needs to be resolved or retrieved, then the document content may be retrieved. The document content may be retrieved by parsing document retrieval information (DRI) from the response IM, as indicated at 212. When no response IM is generated because the IM-enabled printer is the network component executing the IM-printer application, the document retrieval information may be parsed from the IM print request instead of the response IM. The parsed document retrieval information may be used to retrieve the document content, as indicated at 214. The resolved or retrieved print content may be translated into a printable format, as indicated at 216.

Content may be delivered, in printable format, to the printer associated with the destination address, as indicated at 218. In the context of an IM-enabled printer where the content is already located at the destination address the translated content may be printed without further manipulation.

A method for processing IM print requests from the perspective of a mobile device is illustrated in Fig. 5, generally indicated at 300. A mobile device may search for an IM server associated with a known domain name, as indicated at 302. Various methods may be used to search for an IM server as known in the art. An IM server may be located using a domain name search. After finding the an IM server associated with the desired known domain name, a user of the mobile device may send a print subscription request to the IM server, as indicated at 304. A print subscription request may be an IM protocol message asking the IM server to provide the sender of the print subscription request a list of printers that are available for printing documents in response to IM print requests.

The IM server determines if there are any IM printers available for receiving and processing IM print requests, as indicated at 306. In making this determination, the IM server checks for any printers, print servers, or print services that may have registered with the IM server. If no printers have registered with the IM server to process IM print requests, the mobile device receives an IM response indicating that no IM printers (IM-enabled printers, or printers capable of processing IM print requests) are available, as indicated at 308. If IM printers are available, the mobile device receives a printer list from the IM server identifying the printers that are available, as indicated at 310.

A user of the mobile device may select a destination printer from the list received by the mobile device and instruct the mobile device to send an IM print request to the selected printer, as indicated at 312. The selected printer may process the IM print request, as described above. Additionally, the selected printer may reply to the mobile device with a status IM. A status IM may be an instant message protocol communication containing status information describing the processing of the IM print request. The mobile device may receive a print status IM, as indicated at 314.

A method for processing IM print request from the perspective of an IM printer application is shown in Fig. 6, generally indicated at 400. The IM printer application may receive an IM print request from an IM device, or IM client, as indicated at 402. The IM print request may be from a mobile device configured to communicate IM print requests using IM protocol. The IM print request may be routed through an IM server.

The IM printer application may determine if printable content has been included in the IM print request, as indicated at 404. Printable content may be communicated in the Multi-purpose Internet Mail Extensions (MIME) of the IM print request. If there is printable content contained in the IM print request, the IM printer application may translate the print content into a printable format, as indicated at 406. It will be understood that the IM printer application may employ a rendering application or other software application to translate the print content into a printable format.

The IM printer application may determine if print content has been referenced in the IM print request, as indicated at 408. If there is print content referenced in the IM print request, the IM printer application may retrieve referenced print content, as indicated at 410. The IM printer application may be configured to resolve print content itself, or it may employ another application to resolve or retrieve the print content. Resolving print content may include down loading a reference file from a file server, database, document client, etc. IM printer application may translate the resolved print content into printable format, as indicated at 412. The IM printer application may be configured to translate content into a printable format itself, or the IM printer application may employ another application, such as, a print rendering application.

The IM printer application may then forward the translated print content to a printer, as indicated at 414. It should be understood that in a situation where the IM printer application is stored and executed on an IM-enabled printer the forwarding step is not needed, and the formatted content may simply be printed without further manipulation.

An example of the operation of network environment 10 will be discussed with reference to Fig. 1. Assume, for example, a user of mobile device 28 is a salesperson visiting a customer's site. For this example, assume the customer's site includes all the components of print location 26, as described above. The salesperson has a price list document (document 44 of Fig. 1) for a particular line of products that interest the customer stored on mobile device 28.

The salesperson may employ the following method to print the price list for the customer right at a printer on the customer's own LAN (LAN 16). The salesperson may open an IM application 40 on mobile device 28. Initially, IM application 40 may search for an IM server associated with the customer's domain name in order to establish communication with the customer's LAN 16. As those skilled in the art will understand, searching for an IM server may be accomplished in a variety of ways. Typically, the IM application will prompt the user of the mobile device to enter the domain name of the customer's web page, using that information the IM application may be able to find the customer's IM server.

Next, IM application 40 sends a print subscription request to the IM server in order to determine if any printers are available on the customer's LAN to print the price list document. The IM server on the customer's LAN may maintain a list of the IM resources available including the printers that are capable of printing in response to an IM print request. As printers are added to the customer's LAN, the added printers may register with the IM server to keep the IM server's list of available printers updated.

The IM server may respond to the salesperson's print subscription request by sending a list of available printers to the salesperson's mobile device. The list of IM-enabled printers may be similar to the "buddy" list that appears in a typical IM chat application. The salesperson may select a printer and send an IM print request to the selected printer from the mobile device. The salesperson may select a printer from the list received. The IM application may prompt the salesperson to attach print content. The print content may be in the form of the actual price list document, or document reference information indicating where a file containing the pricelist may be found and retrieved. Print content, as used herein, may be a file or data that is contained in or attached to the IM print request, or a reference pointer or identification data that enables an IM print application or other application to retrieve or resolve the print content from a document client or other type of file server.

The mobile device may send an IM print request with the attached document or reference document to the selected printer. Initially, the IM sever may route the IM print request to the printer selected. If the printer selected is a printer that is not capable of directly handling an IM print request, then the print request may be routed to an IM printer application running on a print service or other network component.

The print service or other network component may then process the IM print request, as described above. After processing, the IM print request in the form of a translated print job may be forwarded to the selected printer for printing. If the printer selected is an IM-enabled printer configured to handle IM print request directly, the IM server may route the IM print request directly to the IM-enabled printer for both processing and printing.

After the IM print request is received by an IM printer application, the IM print request may be processed. The IM printer application may open any attached documents and may send the opened attached documents to a rendering application. The rendering application may convert the document into a printable format.

If there is any referenced print content, such as a pointer locating a file containing data to be printed, the IM printer application may resolve the print content or forward the pointer to another application for resolving the print content. After the print content has been resolved, the IM printer application may forward the print content to a rendering application. The rendering application may translate the print content into a printable format.

After all the print content, attached to or referenced in, the IM print request has been converted into a printable format, the selected printer may print the document. The salesperson can then use the price list to close the sale with the customer.

While the present disclosure has been made with reference to the foregoing embodiments, those skilled in the art will understand that many variations may be made therein without departing from the spirit and scope defined in the following claims. The disclosure should be understood to include all novel and non-obvious combinations of elements described herein, and claims may be presented in this or a later application to any novel and non-obvious combination of these elements.

## Claims

1. A printing system (10) comprising: an instant message server (30) configured to process data received using instant message protocol; an instant message printer application (56) associated with the instant message server (30) and configured to translate print data received in instant message protocol into a printable format; and a printer (34) associated with the instant message printer application (56), and configured to print the translated print data.

2. The system of claim 1, further comprising a mobile device (28) having an instant message application (40) configured to communicate with the instant message server (30) using instant message protocol.

3. An instant messaging system (10) comprising: an instant message server (30) configured to process data using instant message protocol; and an instant message printer application (56) configured to translate print data received in instant message protocol into a printable format, and to forward the print data in the printable format to print hardware for printing.

4. An instant message enabled printer (34) comprising: a communications interface (57) configured to transmit and receive data using instant message protocol; an instant message printer application (56) configured to translate print data received in instant message protocol into a printable format, and to forward the print data in a printable format; and print hardware configured to receive print data forwarded from the instant message printer application (56), and to print a document from the forwarded print data.

5. A method (100) of locating available printers comprising: receiving a print discover instant message from a device via a network; generating (104) a printer list response instant message from a printer list database including destination addresses of all printers configured to process instant message print requests; and transmitting (106) the printer list response instant message to the device via the network.

6. The method (100) of claim 5, further comprising: receiving a printer registration instant message containing the destination address of at least one printer configured to process instant message print requests; and updating the printer list database by adding (112) the destination address of the at least one printer.

7. A method (200) of processing a document print request comprising:
receiving (204) an instant message print request from a requesting device via a network, the instant message print request containing document identification data and a destination address on the network; generating (206) a response instant message, with at least one associated document, in response to the instant message print request; and transmitting (208) the response instant message to the destination address on the network.

8. A method (300) of sending a print job from a mobile device, the method comprising: locating (302) an instant message server; sending (304) a print subscription request to the instant message server; receiving (310) a printer list from the instant message server, identifying printers that are available for printing using instant message print requests; and sending (312) an instant message print request to a selected printer from the printer list.

9. A method (400) of printing a document requested via instant messaging protocol, the method comprising: receiving (402) an instant message print request from an instant message compatible device; parsing (406) content information from the instant message print request; and printing (408) print content using the parsed content information.

10. The method (400) of claim 9 further comprising sending a registration message to an instant message server indicating a printer is available for printing via instant message protocol.
